# EUROPEAN PATENT SPECIFICATION

(11) **EP 3 823 137 B1**
(45) Date of publication and mention of the grant of the patent: **01.10.2025**
(21) Application number: 19833619.0
(22) Date of filing: 09.07.2019
(51) Int. Cl.: H02K 3/28, H02K 21/22, H02K 21/14, H02K 29/03, H02K 1/278, H02K 1/2786, A63B 21/005

(54) **ELECTRIC GENERATOR**
ELEKTROGENERATOR
GÉNÉRATEUR ÉLECTRIQUE

(30) Priority: 13.07.2018 CN 201810768348
(43) Date of publication of application: 19.05.2021
(73) Proprietor: Shenzhen Goodfamily Sports Development Co., Ltd., Shenzhen, Guangdong 518000 (CN)
(72) Inventor: ZHANG, Zhe, Shenzhen, Guangdong 518034 (CN); LIAO, Xinchun, Dongguan, Guangdong 523960 (CN); LIAO, Chaohui, Dongguan, Guangdong 523960 (CN)
(74) Representative: Lapienis, Juozas
(86) International application number: PCT/CN2019/095243
(87) International publication number: WO 2020/011161

(56) References cited:
- EP-A1- 0 669 699
- WO-A1-2008/037264
- WO-A1-2016/044925
- CN-A- 104 426 314
- CN-A- 106 208 460
- CN-A- 108 649 720
- CN-U- 208 423 958
- CN-Y- 2 207 656
- US-A1- 2010 133 939
- US-A1- 2011 248 595
- US-A1- 2013 119 789

## Description

### TECHNICAL FIELD

The present invention relates to technical fields of sports fitness equipment and generator, in particular to a power generator.

### BACKGROUND

With rapid development of sports fitness industry, quality requirements of dampers involved in fitness equipment are also higher and higher. It is to be the most scientific approach to use self-generating power principle to form an electromagnetic damper. This not only obtains damping force, but also obtains electric energy, which can be used in the fitness equipment, and is free of external power supply, so that the fitness equipment is able to be used in places without power supply.

However, in the process of self-generating power, there exists a technical problem that the self-generating power generator always produces large or small vibration force and noise, which will affect use quality of the fitness equipment. The existing self-generating power generator (damper) and a permanent magnet generator have this defect, and some of them have obvious vibration.

The principle of self-generating power generation generally utilizes three-phase power generation principle. If the three-phase power generation winding adopts chain type wire embedding method, the vibration and noise are slightly lower, but this cannot satisfy anti vibration requirements of the fitness equipment.

Prior art document WO 2008/037264 A1 discloses a polyphase electrical machine, comprising a salient-pole rotor having an even number of poles, and permanent magnets. In this polyphase electrical machine, both polarities of each permanent magnet are distributed two sides in a direction perpendicular to a diameter of the rotor. In fact, the rotor excitation system is based on radially magnetized permanent magnets, which prevents obtaining an adequately large magnetic flux density in the rotor-to-stator gap.

Document WO 2016/044925 A1 discloses a reluctance assisted external rotor permanent magnet machine provided with fewer magnets without scarifying performance. The external rotor includes permanent magnets arranged in a circumferential direction on the internal surface of the rotor, and magnetically susceptible protrusions respectively arranged between adjacent permanent magnets; the magnetically susceptible protrusions being so configured and sized as to position the magnets so as to reduce cogging torque and torque ripple. The addition of soft magnetic composite blocks reduces the quadrature axis reluctance, since it decreases the air gap thickness in the quadrature axis flux path. Accordingly, this creates a stronger supplemental reluctance torque in the electric machine, which improves performances thereof.

Document US 2011/248595 A1 discloses an electric machine comprising a permanent magnet external rotor, the rotor further comprising air spaces, or transitions, in between permanent magnets, in the circumferential direction. The combination of these transitions in the rotor and the uneven surface of the magnetic teeth in the stator contribute to reducing the cogging torque of the machine.

However, the technical solutions of the prior art are not involved about how to decrease or even eliminate the vibration and noise.

### SUMMARY OF THE INVENTION

The features and advantages of the present invention will be partially mentioned in the following detailed description, or are understood by the description and can be learned by practicing the present invention.

To solve the above problems in the prior art, the present invention provides a power generator, which eliminates source of vibration and noise in principle and makes the power generator operate in a mute state. Especially, the power generator can well meet with use requirements of various fitness devices.

A solution to solve the above problems is provided in the present invention as follows:
A power generator according to claim 1, is provided, which comprises a stator power generation armature and a rotor excitation magnet, in which:
The stator power generation armature extends a plurality of cylindrical induction magnetic poles in a direction towards the rotor excitation magnet, and power generation windings are wound on the cylindrical induction magnetic poles;
The rotor excitation magnet comprises at least two layers of structures attached to each other in a direction towards the stator power generation armature, one of which is made of a non-magnetic conductive material, and the other layer is formed by alternately arranging ferromagnetic material excitation magnets and magnetic conduction material magnetizers in a circumferential direction, accordingly forming a plurality of couples of excitation magnets for power generation. The magnetic conduction material magnetizers occupy relatively smaller space proportion than the ferromagnetic material excitation magnets in the rotor excitation magnet.

In accordance to the present invention, the stator power generation armature and the rotor excitation magnet use a structure of outer rotor and inner stator, wherein the stator power generation armature has an inner ring, a plurality of cylindrical induction magnetic poles are extended outwards from the inner ring, and the cylindrical induction magnetic poles are wound with the power generation windings.

In accordance to the present invention, the rotor excitation magnet comprises three layers in the direction towards the stator power generation armature, which are arranged in the following order:
rotor outer ring composed of magnetic conductive material;
rotor middle layer composed of non-magnetic conductive material;
rotor inner ring, formed by alternately arranging the ferromagnetic material excitation magnets and the magnetic conduction material magnetizers in a circumferential direction.

In an embodiment not being part of the present invention, a face of the ferromagnetic material excitation magnet facing the stator power generation armature has a thick middle forming an inner arc surface and two thin edges forming an inclined plane.

In accordance to an embodiment not part of the claimed invention, the stator power generation armature and the rotor excitation magnet use a structure of outer stator and inner rotor, wherein the stator power generation armature has an outer ring, a plurality of cylindrical induction magnetic poles are extended inwards from the outer ring, and the cylindrical induction magnetic poles are wound with the power generation windings.

In accordance to the embodiment not being part of the present invention, the rotor excitation magnet comprises two layers in the direction towards the stator power generation armature, which are arranged in the following order:
rotor inner ring composed of non-magnetic conductive material;
rotor outer ring, formed by alternately arranging the ferromagnetic material excitation magnets and the magnetic conduction material magnetizers in a circumferential direction.

In a preferred embodiment, the ferromagnetic material excitation magnet has a thick middle forming an outer arc surface and two thin edges forming an inclined plane.

In another preferred embodiment, a combination ratio of the number of the cylindrical induction magnetic poles and the number of the ferromagnetic material excitation magnets on the rotor excitation magnet meets a double three-phase power generation condition.

Preferably, the number of the cylindrical induction magnetic poles is 12 and the ferromagnetic material excitation magnets has five pairs, and thus the combination ratio meets the double three-phase double pole power generation; or the number of the cylindrical induction magnetic poles is 24 and the ferromagnetic material excitation magnets has ten pairs, and thus the combination ratio meets the double three-phase four pole power generation.

In a preferred embodiment, power generation output circuits of the double three-phase double pole power generation or the double three-phase four pole power generation utilize single group three-phase power generation output or double group three-phase power generation output.

The present power generator provides a technical solution in the structure features that the rotor excitation magnet uses at least two layers with different materials, one of which is made of a non-magnetic conductive material, and the other layer is formed by alternately arranging ferromagnetic material excitation magnets and magnetic conduction material magnetizers in a circumferential direction, so as to relieve sudden change of magnetic potential difference in a junction area of excitation magnetic field. This can effectively reduce vibration and noise during the operation process of the generator.

In a preferred embodiment, the ferromagnetic material excitation magnet is an irregular shape which is thick in the middle and thin on both edges. A further preferred solution is provided that a face of the ferromagnetic material excitation magnet facing the stator power generation armature has a thick middle forming an arc surface and two thin edges forming an inclined plane. This achieves function of relieving sudden change of magnetic potential difference in a junction area of the excitation magnetic field, and further reduces vibration and noise during the operation process of the generator.

In the same time, the present invention achieves the combination ratio of the number of the cylindrical induction magnetic poles and the number of the excitation magnets satisfying the double three-phase power generation condition, so that vibration force of the excitation magnetic field on iron core is weakened.

Through combination of the above technical solutions of the present invention, it is achieved that the source of vibration and noise is eliminated from the root and an excellent power generator is provided for industries of sports fitness apparatus and generator.

By reading the present description, those skilled in the art will better understand the features and contents of these technical solutions.

### BRIEF DESCRIPTION OF THE DRAWING(S)

The present invention will be in detail explained and the implement approaches and advantages of the present invention will be better understood through the following exemplary embodiments with reference to the accompanying drawings. The contents shown in the accompanying drawings are only for explanation of the present invention, in which:
Fig. 1 is a schematic view of a power generator using a structure of outer rotor and inner stator with a combination ratio for double three-phase double pole combination, in accordance with the present invention.
Fig. 2 is a schematic view of another power generator using a structure of outer stator and inner rotor with a combination ratio for double three-phase double pole combination, in accordance with an embodiment that does not form part of the present invention.
Fig. 3 is a schematic view of a stator power generation armature in Fig. 1.
Fig. 4 is a schematic view of a rotor excitation magnet in Fig. 1.
Fig. 5a is a cross-sectional view of a single ferromagnetic material excitation magnet in Fig. 1.
Fig. 5b is a cross-sectional view of another single ferromagnetic material excitation magnet corresponding to the non-claimed embodiment of Fig. 2.
Fig. 6 is a schematic view of power generation windings using single group three-phase power generation output in Fig. 1.
Fig. 7 is a schematic view of other power generation windings using double group three-phase power generation output in Fig. 1.
Fig. 8 is a schematic view of another power generator using a structure of outer rotor and inner stator with a combination ratio for double three-phase four pole combination, in accordance with one embodiment of the present invention.

### DETAILED DESCRIPTION OF THE INVENTION

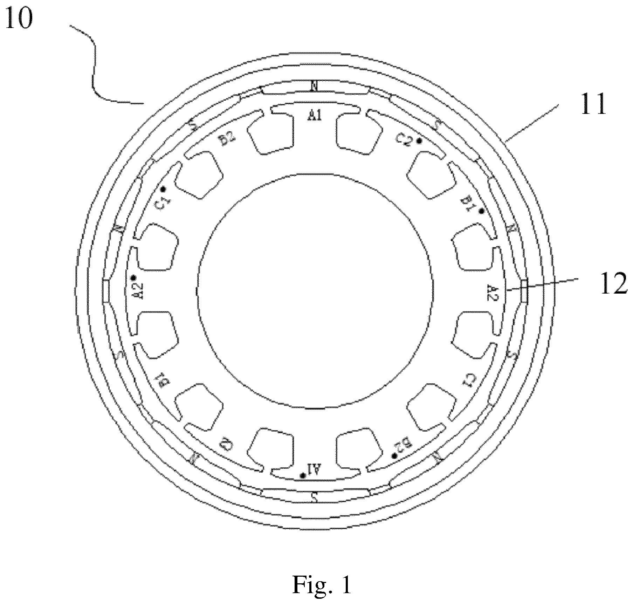

As shown in Figs. 1, 3 and 4, in accordance with the present invention, a power generator 10 comprises a stator power generation armature 12 and a rotor excitation magnet 11. The stator power generation armature 12 and the rotor excitation magnet 11 use a structure of outer rotor and inner stator. Wherein, the stator power generation armature 12 has an inner ring 121, a plurality of cylindrical induction magnetic poles 122 are extended outwards from the inner ring 121, and the cylindrical induction magnetic poles 122 are wound with the power generation windings 123.

The rotor excitation magnet 11 comprises three layers in a direction towards the stator power generation armature 12, which are arranged in the following order:
rotor outer ring 110 composed of magnetic conductive material and having a function of magnetic field shielding;
rotor middle layer 112 composed of non-magnetic conductive material;
rotor inner ring 111, formed by alternately arranging the ferromagnetic material excitation magnets 1110 and the magnetic conduction material magnetizers 1111 in a circumferential direction.

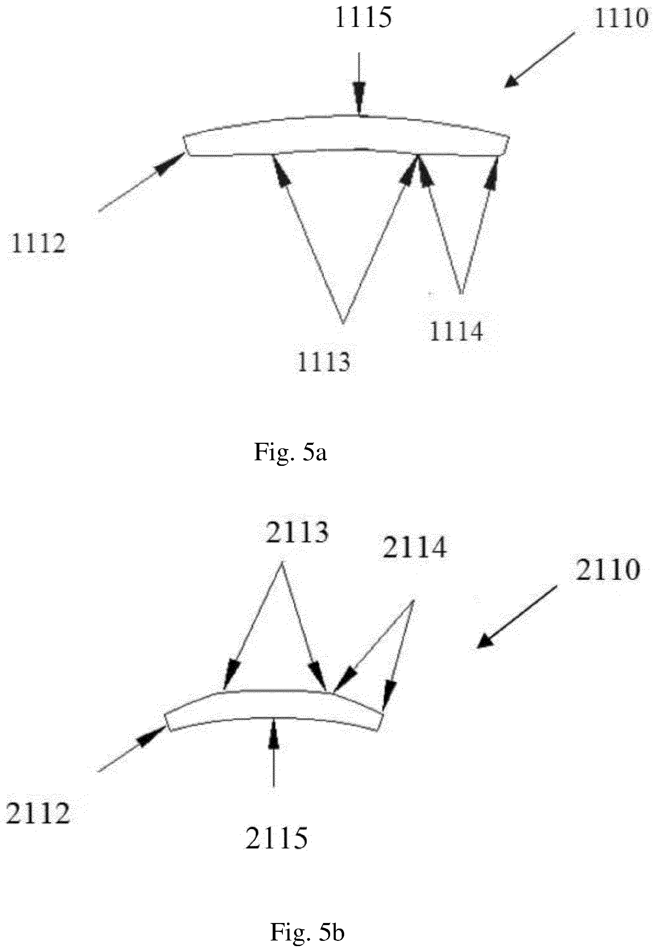

As shown in Fig. 5a, in a preferred embodiment, the ferromagnetic material excitation magnet 1110 is an irregular shape which is thick in the middle and thin on both edges. In particular, a face of the ferromagnetic material excitation magnet 1110 facing the stator power generation armature 12 has a thick middle forming an inner arc surface 1113 and two thin edges forming an inclined plane 1114.

Fig. 1 shows structure of the stator power generation armature 12 and a rotor excitation magnet 11 in a double three-phase double pole power generator, which has a body structure of outer rotor and inner stator. A combination ratio of the number of the cylindrical induction magnetic poles 122 and the number of the ferromagnetic material excitation magnets 1110 on the rotor excitation magnet 11 meets a double three-phase power generation condition. Preferably, as shown in Fig. 1, the number of the ferromagnetic material excitation magnets 1110 is 10 and the number of the cylindrical induction magnetic poles 122 is 12. Ten excitation magnets combined with corresponding twelve cylindrical induction magnetic poles constitute the condition of double three-phase two pole power generation in the overall magnetic circuit distribution structure. Specifically, A1 and A1°, as designated in Fig. 1, represents locations occupied by the cylindrical induction magnetic poles corresponding to phase A of a first group of three-phase, and A2 and A2° designated in Fig. 1 represents locations occupied by phase A of a second group of three-phase. In the Figure, electrical angle with a difference of 120 degrees at head ends of A1, B1 and C1 meets the three-phase two pole power generation condition, and electrical angle with a difference of 120 degrees at head ends of A2, B2 and C2 meets the three-phase two pole power generation condition. Accordingly, the condition of double three-phase two pole power generation is satisfied in the whole generator system.

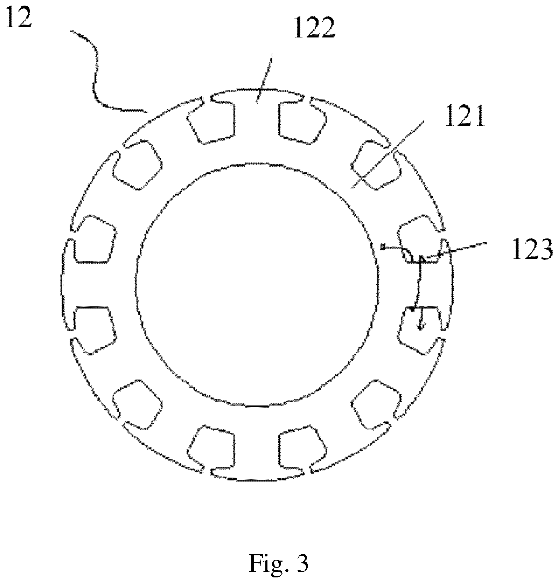

In a body structure of double three-phase two pole power generator, as shown in Fig. 3, the stator power generation armature has an inner ring, a plurality of cylindrical induction magnetic poles are extended outwards from the inner ring, and the cylindrical induction magnetic poles are wound with the power generation windings.

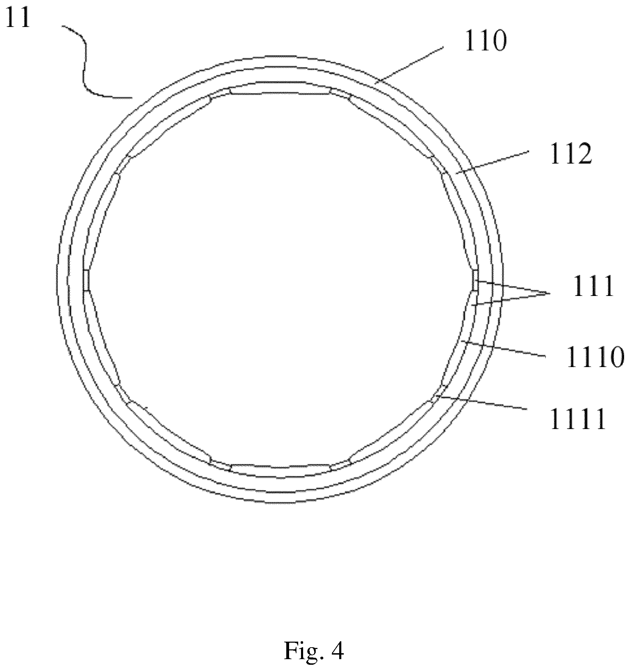

As shown in Fig. 4, the rotor excitation magnet comprises three layers composed of three different materials; and the three different materials of the three layers are correspondingly as follows: rotor outer ring 110 composed of magnetic conductive material, which is optionally electrical pure iron, cast iron, cast steel, etc.; rotor middle layer 112 composed of non-magnetic conductive material, which is optionally aluminum, stainless steel, plastic, etc.; rotor inner ring 111 formed by alternately arranging the ferromagnetic material excitation magnets 1110 and the magnetic conduction material magnetizers 1111, the ferromagnetic material excitation magnets 1110 is made of neodymium iron boron, ferrite, etc., and the magnetic conduction material magnetizers 1111 is made of iron plate, steel plate, etc. Certainly, the ferromagnetic material excitation magnet 1110 might use permanent magnet excitation, or optionally use electromagnetic excitation.

Processing method: the rotor outer ring 110 is beneficially cast together with other parts of the rotor, and the rotor middle layer 112 is usefully separately processed into a ring and inserted into the rotor inner ring 110. For the rotor inner ring 111, the ferromagnetic material excitation magnets 1110 are processed and shaped to magnetize, in order to excite the self-generating power generator, and the magnetic material magnets 1111 are formed by small iron bars which are generally stamped by iron plate or steel plate. The small iron bars are inserted between two ferromagnetic material excitation magnets 1110 (such as permanent magnets or electromagnetic materials), in order to relieve sudden change of magnetic potential difference between two permanent magnets or two magnetic poles N and S of electromagnetic material, namely, to relieve the sudden change of magnetic potential difference in a junction area of excitation magnetic field.

In the present invention, the combination ratio of the number of the cylindrical induction magnetic poles and the number of the excitation magnets satisfy the double three-phase power generation condition, so that vibration force of the excitation magnetic field on iron core is weakened.

Power generation output circuits of the double three-phase double pole power generation or the double three-phase four pole power generation utilize single group three-phase power generation output, or optionally double group three-phase power generation output.

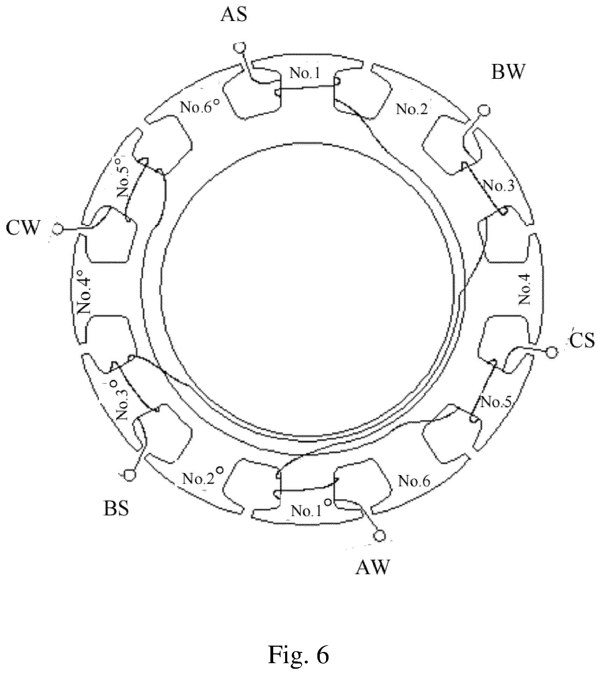

Fig. 6 is a schematic view of power generation windings using single group three-phase power generation output in Fig. 1. In the Figure, the head end of phase A starts winding from No. 1 cylindrical induction magnetic pole, and then spans to No. 1° cylindrical induction magnetic pole to continue winding. After completing the winding of phase A, tail end of phase A is led out from the No. 1° cylindrical induction magnetic pole. A particular winding method is in detail shown in the power generation winding, as shown in Fig. 6. The winding method of phase B and phase C in Fig. 6 is the same as that of phase A. As, BS and CS represent the head end of phase A, the head end of phase B and the head end of phase C respectively; and AW, BW and CW represent the tail end of phase A, the tail end of phase B and the tail end of phase C respectively.

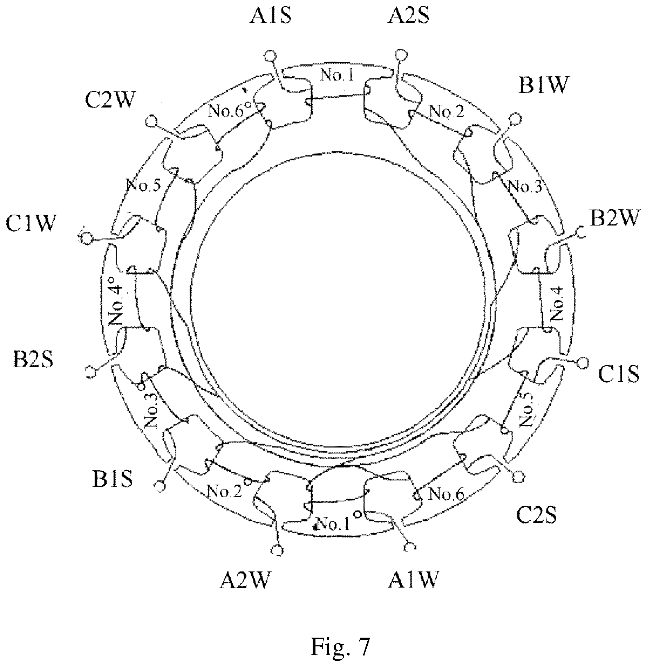

Fig. 7 is a schematic view of other power generation windings using double group three-phase power generation output in Fig. 1. A1S, B1S and C1s represent the head end of phase A1, the head end of phase B1 and the head end of phase C1 respectively; A1W, B1W and C1W represent the tail end of phase A1, the tail end of phase B1 and the tail end of phase C1 respectively; A2S, B2S and C2S represent the head end of phase A2, the head end of phase B2 and the head end of phase C2 respectively; A2W, B2W and C2W represent the tail end of phase A2, the tail end of phase B2 and the tail end of phase C2 respectively. In the first group of three-phase in the figure, the head end of phase A1 (No.1) is connected to the tail end of phase A1 (No.1°), the head end of phase B1 (No.3°) is connected to the tail end of phase B1 (No.3), and the head end of phase C1 (No.5) is connected to the tail end of phase C1 (No.5°). In the second group of three-phase in the figure, the head end of phase A2 (No. 2) is connected to the tail end of phase A2 (No. 2°), the head end of phase B2 (No. 4°) is connected to the tail end of phase B2 (No. 4), and the head end of phase C2 (No. 6) is connected to the tail end of phase C (No. 6°). A particular winding method is in detail shown in Fig. 7.

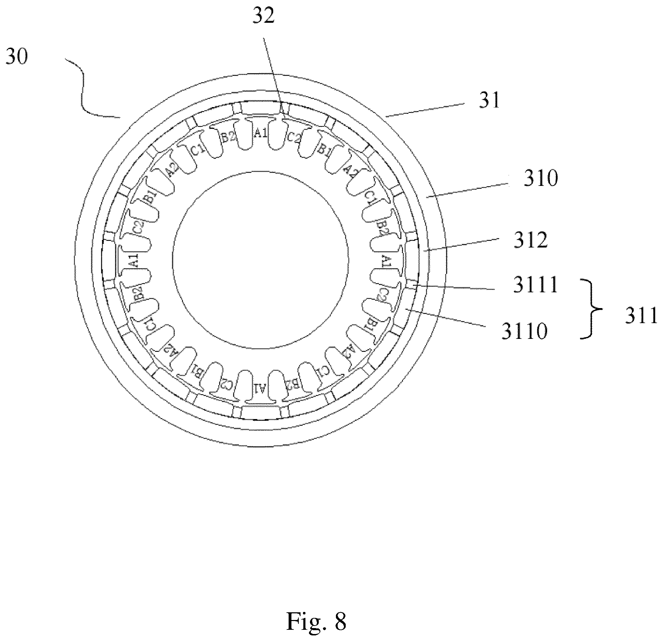

Fig. 8 is a schematic view of another power generator using a structure of outer rotor and inner stator with a combination ratio for double three-phase four pole combination, in accordance with one embodiment of the present invention. The power generator 30 includes a stator power generation armature 32 and a rotor excitation magnet 31. The stator power generation armature 32 and the rotor excitation magnet 31 uses structure of outer rotor and inner stator. Wherein, the stator power generation armature 32 has an inner ring, a plurality of cylindrical induction magnetic poles are extended outwards from the inner ring, and the cylindrical induction magnetic poles are wound with the power generation windings. The rotor excitation magnet 31 includes three layers in a direction towards the stator power generation armature 32; and the three layers are correspondingly as follows:
rotor outer ring 310 composed of magnetic conductive material;
rotor middle layer 312 composed of non-magnetic conductive material;
rotor inner ring 311, formed by alternately arranging the ferromagnetic material excitation magnets 3110 and the magnetic conduction material magnetizers 3111 in a circumferential direction.

The principle in such a structural is similar to that in Fig. 1, except that the rotor excitation magnet in this figure contains twenty ferromagnetic material excitation magnets 3110, twenty-four cylindrical induction magnetic poles surround on the stator power generation armature 32, and the magnetic circuit distribution meets the conditions of double three-phase four pole power generation.

For double three-phase four pole power generation, the winding structure principle of each phase is the same as that of double three-phase double pole power generation. For example, four A1 are marked on the stator cylindrical induction magnetic poles on the stator power generation armature 32, and they are distributed at an angle of 90 degrees relatively to each other, indicating the locations occupied by the A-phase windings of the first group of three-phase four pole combination. The other phases are similar to this winding method.

It is proved by experiments that no matter double three-phase double pole or double three-phase four pole power generation, single group of three-phase power generation output or double group of three-phase power generation output are optionally adopted, and anti-vibration effect is not affected.

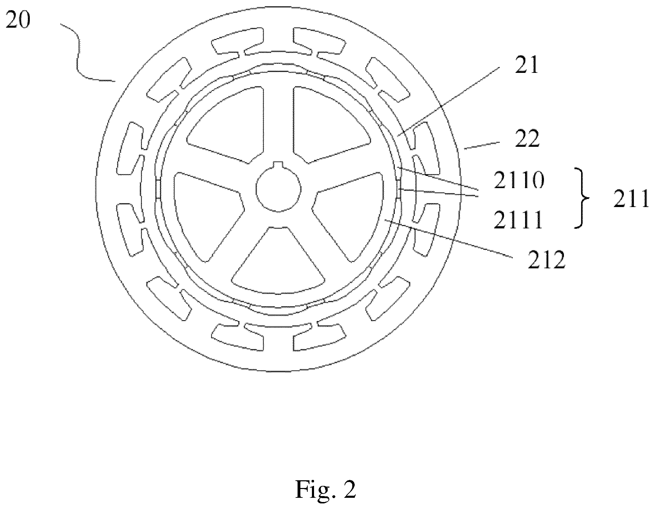

As shown in Fig. 2, in accordance with an embodiment that does not form part of the present invention, a power generator 20 comprises a stator power generation armature 22 and a rotor excitation magnet 21. The stator power generation armature 22 and the rotor excitation magnet 21 use a structure of outer stator and inner rotor. Wherein, the stator power generation armature 22 has an outer ring 221, a plurality of cylindrical induction magnetic poles 222 are extended inwards from the outer ring 221, and the cylindrical induction magnetic poles are wound with the power generation windings.

The rotor excitation magnet 21 contains two layers in a direction towards the stator power generation armature 22, which are arranged in the following order:
rotor inner ring 212 composed of non-magnetic conductive material;
rotor outer ring 211, formed by alternately arranging the ferromagnetic material excitation magnets and the magnetic conduction material magnetizers in a circumferential direction.

The structure in Fig. 2 uses the inner rotor excitation magnet, and the ferromagnetic material excitation magnets 2110 are attached to rotor outer ring 211 and arranged alternately with the magnetic conduction material magnetizers 2111. A shaft and other parts of the rotor inner ring are generally made of steel material, which is magnetic conductive material. Therefore, the rotor exciting magnet 21 beneficially use two layers, and is free of additional magnetic conductive material for magnetic field shielding.

In the embodiment not being part of the present invention, as shown in Fig. 5b, the ferromagnetic material excitation magnet 2110 is an irregular shape which is thick in the middle (referred to as designated number 2115) and thin on both edges (referred to as designated number 2112). In particular, the ferromagnetic material excitation magnet 2110 has the thick middle forming an outer arc surface 2113 and two thin edges forming an inclined plane 2114.

The structure principle in Fig. 2 is consistent with that in Fig. 1, except that the rotor excitation magnet is different, and structural relationship between the stator and the rotor is interchangeable. The structure in Fig. 2 will not be described in detail here.

In the present solution to mute power generation, in the structure, the excitation magnet uses at least two layers of different materials; and the ferromagnetic material excitation magnets is an irregular shape with the thick middle and two thin edges. In the method features, magnetic circuit distribution properties of the double three-phase power generation are applied, so that the power generator can eliminate the source of vibration and noise from the root, and provides excellent new generator products for the sports fitness equipment industry and high demand power generation places.

The preferred embodiments of the present invention have been described above with reference to the accompanying drawings. A variety of variants to implement the present invention will be achieved by one ordinary skilled in the art without departing from the scope of the present invention as defined by the appended claims. For example, the features shown or described as part of one embodiment may be used in another embodiment to obtain still another embodiment. The preferred and feasible embodiments of the present invention are described above, and it is not a limitation for the claimed scope of the present invention. All changes made by using the description and the accompanying drawings of the present invention are included in the claimed scope of the present invention.

## Claims

1. A power generator (10), comprising a stator power generation armature (12, 32) and a rotor excitation magnet (11, 31), wherein:
the stator power generation armature (12, 32) extends a plurality of cylindrical induction magnetic poles (122) in a direction towards the rotor excitation magnet (11, 31), and power generation windings (123) are wound on the cylindrical induction magnetic poles (122); and
the rotor excitation magnet (11, 31) comprises at least two layers of structures attached to each other, one of which is made of a non-magnetic conductive material, and the other layer is formed by alternately arranging ferromagnetic material excitation magnets (1110, 3110) and magnetic conduction material magnetizers (1111, 3111) in a circumferential direction, accordingly forming a plurality of couples of excitation magnets for power generation, the ferromagnetic material excitation magnets (1110, 3110) being arranged along a circumferential direction and having two lateral ends facing towards adjacent magnetic conduction material magnetizers (1111, 3111), the ferromagnetic material excitation magnets being longer in the circumferential direction than the cylindrical induction magnetic poles (122) of the stator (12), and the polarity of each ferromagnetic material excitation magnet (1110, 3110) being arranged in a radial direction, the stator power generation armature (12, 32) and the rotor excitation magnet use a structure of outer rotor and inner stator, wherein the stator power generation armature (12, 32) has an inner ring, a plurality of cylindrical induction magnetic poles are extended outwards from the inner ring (121), and the cylindrical induction magnetic poles (122) are wound with the power generation windings, wherein the rotor excitation magnet (11, 31) further comprises three layers attached to each other in a direction toward the stator power generation armature, and the three layers are arranged in the following order:
rotor outer ring (110, 310) composed of magnetic conductive material;
rotor middle layer (112, 312) composed of non-magnetic conductive material;
rotor inner ring (111, 311), formed by alternately arranging the ferromagnetic material excitation magnets (1110, 3110) and the magnetic conduction material magnetizers (1111, 3111) in a circumferential direction;
the magnetic conduction material magnetizers (1111, 3111) occupying relatively smaller space proportion than the ferromagnetic material excitation magnets (1110, 3110) in the rotor excitation magnet (11, 31).

2. The power generator according to claim 1, wherein a face of the ferromagnetic material excitation magnet (1110, 3110) facing the stator power generation armature (12, 32) has a thick middle forming an inner arc surface (1113) and two thin edges forming an inclined plane (1114).

3. The power generator according to claim 1, wherein a combination ratio of the number of the cylindrical induction magnetic poles (122) and the number of the ferromagnetic material excitation magnets (1110, 3110) on the rotor excitation magnet (11, 31) meets a double three-phase power generation condition.

4. The power generator according to claim 3, wherein the number of the cylindrical induction magnetic poles (122) is 12 and the ferromagnetic material excitation magnets (1110) has five pairs, and thus the combination ratio meets the double three-phase double pole power generation condition; or the number of the cylindrical induction magnetic poles is 24 and the ferromagnetic material excitation magnets (3110) has ten pairs, and thus the combination ratio meets the double three-phase four pole power generation condition.

5. The power generator according to claim 4, wherein power generation output circuits of the double three-phase double pole power generation or the double three-phase four pole power generation utilize single group three-phase power generation output or double group three-phase power generation output.

## Patentansprüche

1. Stromerzeuger (10), umfassend einen Stator-Stromerzeugungsanker (12, 32) und einen Rotor-Erregungsmagneten (11, 31), wobei
sich eine Vielzahl von zylindrischen Induktionsmagnetpolen (122) vom Stator-Stromerzeugungsanker (12, 32) in einer Richtung zum Rotor-Erregungsmagneten (11, 31) erstreckt und Stromerzeugungswicklungen (123) auf den zylindrischen Induktionsmagnetpolen (122) gewickelt sind; und
der Rotor-Erregungsmagnet (11, 31) mindestens zwei aneinander befestigte Schichten der Strukturen umfasst, von denen eine aus einem nichtmagnetischen, leitfähigen Material hergestellt ist, und die andere Schicht durch eine abwechselnde Anordnung von Erregungsmagneten (1110, 3110) aus ferromagnetischem Material und Magnetleitern (1111, 3111) aus magnetischem, leitfähigem Material in einer Umfangsrichtung gebildet ist, wodurch eine Vielzahl von Paaren von Erregungsmagneten zur Stromerzeugung entsprechend gebildet wird, die Erregungsmagneten (1110, 3110) aus ferromagnetischem Material entlang einer Umfangsrichtung angeordnet sind und zwei Seitenenden aufweisen, die den benachbarten Magnetleitern (1111, 3111) aus magnetischem, leitfähigem Material zugewandt sind, die Erregungsmagneten aus ferromagnetischem Material in der Umfangsrichtung als die zylindrischen Induktionsmagnetpole (122) des Stators (12) länger sind, und die Polarität jedes Erregungsmagneten (1110, 3110) aus ferromagnetischem Material in einer radialen Richtung angeordnet ist, der Stator-Stromerzeugungsanker (12, 32) und der Rotor-Erregungsmagnet eine Struktur des Außenrotors und des Innenstators verwenden, wobei der Stator-Stromerzeugungsanker (12, 32) einen Innenring aufweist, sich eine Vielzahl von zylindrischen Induktionsmagnetpolen nach außen vom Innenring (121) erstreckt, und die zylindrischen Induktionsmagnetpole (122) mit den Stromerzeugungswicklungen umwickelt sind, wobei der Rotor-Erregungsmagnet (11, 31) zusätzlich drei in einer Richtung zum Stator-Stromerzeugungsanker aneinander befestigte Schichten umfasst, und die drei Schichten in der folgenden Reihenfolge angeordnet sind:
Rotor-Außenring (110, 310), zusammengesetzt aus magnetischem, leitfähigem Material;
Rotor-Mittelschicht (112, 312), zusammengesetzt aus nichtmagnetischem, leitfähigem Material;
Rotor-Innenring (111, 311), gebildet durch abwechselnde Anordnung der Erregungsmagneten (1110, 3110) aus ferromagnetischem Material und der Magnetleiter (1111, 3111) aus magnetischem, leitfähigem Material in einer Umfangsrichtung;
die Magnetleiter (1111, 3111) aus magnetischem, leitfähigem Material, die im Rotor-Erregungsmagneten (11, 31) einen relativ geringeren Raumanteil als die Erregungsmagneten (1110, 3110) aus ferromagnetischem Material einnehmen.

2. Stromerzeuger nach Anspruch 1, wobei eine Vorderseite des Erregungsmagneten (1110, 3110) aus ferromagnetischem Material, die dem Stator-Stromerzeugungsanker (12, 32) zugewandt ist, eine dicke Mitte aufweist, die eine innere Bogenfläche (1113) bildet, und zwei dünne Kanten, die eine geneigte Ebene (1114) bilden.

3. Stromerzeuger nach Anspruch 1, wobei ein Kombinationsverhältnis der Anzahl der zylindrischen Induktionsmagnetpole (122) und der Anzahl des Erregungsmagneten (1110, 3110) aus ferromagnetischem Material auf dem Rotor-Erregungsmagneten (11, 31) eine doppelte dreiphasige Bedingung zur Stromerzeugung erfüllt.

4. Stromerzeuger nach Anspruch 3, wobei die Anzahl der zylindrischen Induktionsmagnetpole (122) 12 beträgt und die Erregungsmagneten (1110) aus ferromagnetischem Material fünf Paare aufweisen, und somit das Kombinationsverhältnis die doppelte dreiphasige doppelpolige Bedingung zur Stromerzeugung erfüllt;
oder die Anzahl der zylindrischen Induktionsmagnetpole 24 beträgt und die Erregungsmagneten (3110) aus ferromagnetischem Material zehn Paare aufweisen, und somit das Kombinationsverhältnis die doppelte dreiphasige vierpolige Bedingung zur Stromerzeugung erfüllt.

5. Stromerzeuger nach Anspruch 4, wobei Stromerzeugungsausgangskreise der doppelten dreiphasigen doppelpoligen Stromerzeugung oder der doppelten dreiphasigen vierpoligen Stromerzeugung dreiphasigen Einzelgruppen-Stromerzeugungsausgang oder dreiphasigen Doppelgruppen-Stromerzeugungsausgang verwenden.

## Revendications

1. Générateur (10) d'énergie, comprenant une armature (12, 32) de génération d'énergie de stator et un aimant (11, 31) d'excitation de rotor, dans lequel l'armature (12, 32) de génération d'énergie de stator étend une pluralité de pôles (122) magnétiques d'induction cylindriques dans une direction vers l'aimant (11, 31) d'excitation de rotor, et des enroulements (123) de génération d'énergie sont enroulés sur les pôles (122) magnétiques d'induction cylindriques; et
l'aimant (11, 31) d'excitation du rotor comprend au moins deux couches de structures fixées l'une à l'autre, dont l'une est constituée d'un matériau conducteur non magnétique, et l'autre couche est formée par une disposition alternée d'aimants (1110, 3110) d'excitation en matériau ferromagnétique et de magnétiseurs (1111, 3111) en matériau de conduction magnétique dans une direction circonférentielle, formant ainsi une pluralité de couples d'aimants d'excitation pour la production d'énergie, les aimants (1110, 3110) d'excitation en matériau ferromagnétique étant disposés le long d'une direction circonférentielle et ayant deux extrémités latérales tournées vers des magnétiseurs (1111, 3111) adjacents en matériau de conduction magnétique, où les aimants d'excitation en matériau ferromagnétique sont plus longs dans une direction circonférentielle que les pôles (122) magnétiques d'induction cylindriques de stator (12), et la polarité de chaque aimant (1110, 3110) d'excitation en matériau ferromagnétique est disposée radialement, l'armature (12, 32) de génération d'énergie de stator et l'aimant d'excitation de rotor utilisent une structure à rotor externe et stator interne, où l'armature (12, 32) de génération d'énergie de stator comporte une bague interne, plusieurs pôles magnétiques d'induction cylindriques s'étendent vers l'extérieur depuis la bague (121) interne, et les pôles (122) magnétiques d'induction cylindriques sont enroulés avec les enroulements de génération d'énergie, où l'aimant (11, 31 d'excitation de rotor) comprend en outre trois couches fixées l'une à l'autre en direction de l'armature de génération d'énergie de stator, et les trois couches sont disposées dans l'ordre suivant:
la bague (110, 310) externe de rotor composée d'un matériau conducteur magnétique;
la couche (112, 312) intermédiaire de rotor composée d'un matériau conducteur non magnétique;
la bague (111, 311) interne de rotor, formée en disposant alternativement les aimants (1110, 3110) d'excitation en matériau ferromagnétique et les magnétiseurs (1111, 3111) en matériau de conduction magnétique dans une direction circonférentielle;
les magnétiseurs (1111, 3111) en matériau de conduction magnétique occupant une proportion d'espace relativement plus petite que les aimants (1110, 3110) d'excitation en matériau ferromagnétique dans l'aimant (11, 31) d'excitation de rotor.

2. Le générateur d'énergie selon la revendication 1, dans lequel une face de l'aimant (1110, 3110) d'excitation en matériau ferromagnétique faisant face à l'armature (12, 32) de génération d'énergie de stator présente un milieu épais formant une surface (1113) d'arc interne et deux bords minces formant un plan (1114) incliné.

3. Le générateur d'énergie selon la revendication 1, dans lequel un rapport de combinaison du nombre de pôles (122) magnétiques d'induction cylindriques et du nombre d'aimants (1110, 3110) d'excitation en matériau ferromagnétique sur l'aimant (11, 31) d'excitation de rotor satisfait une condition de génération d'énergie double triphasée.

4. Le générateur d'énergie selon la revendication 3, dans lequel le nombre de pôles (122) magnétiques d'induction cylindriques est 12 et les aimants (1110) d'excitation en matériau ferromagnétique ont cinq paires, et ainsi le rapport de combinaison satisfait une condition de génération d'énergie double triphasée bipolaire; ou le nombre de pôles magnétiques d'induction cylindriques est 24 et les aimants (3110) d'excitation en matériau ferromagnétique ont dix paires, et ainsi le rapport de combinaison satisfait une condition de génération d'énergie double triphasée quadripolaire.

5. Le générateur d'énergie selon la revendication 4, dans lequel les circuits de sortie de génération d'énergie de la génération d'énergie double triphasée bipolaire ou de la génération d'énergie double triphasée quadripolaire utilisent une sortie de génération d'énergie triphasée de groupe unique ou une sortie de génération d'énergie triphasée de double groupe.
